# EUROPEAN PATENT APPLICATION

(11) **EP 4 491 462 A1**
(43) Date of publication of application: **15.01.2025**
(21) Application number: 24187712.5
(22) Date of filing: 10.07.2024
(51) Int. Cl.: B60R 16/033, H01R 13/02, H01R 13/66, H01R 13/703

(54) **POWER SUPPLY INTERFACE DEVICE, POWER SUPPLY METHOD AND VEHICLE**

(30) Priority: 10.07.2023 CN 202310842353
(71) Applicant: Xiaomi EV Technology Co., Ltd., 100176 Beijing (CN)
(72) Inventor: ZU, Xiangyu, Beijing, 100176 (CN)
(74) Representative: Stöckeler, Ferdinand

(57) **Abstract**

A power supply interface device is applied to a vehicle, and the power supply interface device includes a power supply circuit. The power supply circuit includes: a first input interface (10) configured to be connected with a battery of the vehicle; and a first output interface (20) of the contact type configured to be connected with a second input interface of a contact type of the electrical equipment, so that the battery of the vehicle is configured to transmit a power supply current to the electrical equipment through the power supply circuit.

## Description

### FIELD

The present invention relates to the field of vehicle-mounted electronic accessories, and more particularly to a power supply interface device, a power supply method and a vehicle.

### BACKGROUND

There are three main ways to provide a user with power for electronic equipment in a vehicle cockpit. The first way is to supply power through a universal serial bus (USB) interface. The second way is to supply power through a cigarette lighter, which requires the user to additionally install a vehicle charger with a cigarette lighter interface. The third way is to supply power through a 220V power supply, which requires the user to use a power adapter in cooperation to supply power to low-voltage electronic equipment. These three ways all require the user to connect the power supply interface with the charged equipment by using a power supply wiring harness. However, with the vehicle cockpit gradually developing into a third living space of human beings, more and more electronic equipment are used in the vehicle, such as a smart speaker, a fragrance machine, a humidifier, a microphone, a virtual reality (VR) device, etc. More and more power supply wiring harnesses will make the limited interior space of the vehicle more messy.

### SUMMARY

In order to overcome the problems existing in the related art, the present invention provides a power supply interface device, a power supply method and a vehicle.

According to a first aspect of embodiments of the present invention, there is provided a power supply interface device, which is to be applied to a vehicle, and includes a power supply circuit. The power supply circuit includes: a first input interface configured to be connected with a battery of the vehicle; and a first output interface of a contact type configured to be connected with a second input interface of a contact type of an electrical equipment, so that the battery of the vehicle is able to transmit a power supply current to the electrical equipment through the power supply circuit.

Optionally, the power supply circuit further comprises a detection control circuit, and the first input interface is connected with the first output interface through the detection control circuit; the first output interface comprises a first grounding contact, a first power supply contact and a detection contact, the detection contact is configured to be connected with a second grounding contact of the second input interface; and the detection control circuit is configured to conduct an electrical connection between the first input interface and the first output interface at least when the detection contact is connected with the second grounding contact, and to break off the electrical connection between the first input interface and the first output interface when the detection contact is disconnected from the second grounding contact.

Optionally, an arrangement position of the first grounding contact and an arrangement position of the detection contact are symmetrically distributed with respect to an arrangement position of the first power supply contact.

Optionally, the detection control circuit comprises a control chip and a phase inverting sub-circuit, and the phase inverting sub-circuit is connected between the detection contact and a first end of the control chip; and the phase inverting sub-circuit is configured to inform the control chip whether the detection contact is connected with the second grounding contact.

Optionally, a second end of the control chip is connected with the first grounding contact, a third end of the control chip is connected with the first power supply contact, and a fourth end of the control chip is connected with the first input interface, wherein the first grounding contact is configured to be connected with a third grounding contact of the second input interface, and the first power supply contact is configured to be connected with a second power supply contact of the second input interface; and the control chip is configured to conduct or break off the electrical connection between the first input interface and the first output interface.

Optionally, the detection control circuit further comprises a voltage dividing sub-circuit and an AND gate sub-circuit; a first end of the voltage dividing sub-circuit is connected with a first input end of the AND gate sub-circuit, and a second end of the voltage dividing sub-circuit is connected with the first input interface; and the phase inverting sub-circuit is connected between the detection contact and the first end of the control chip, wherein the phase inverting sub-circuit is connected with a second input end of the AND gate sub-circuit, and an output end of the AND gate sub-circuit is connected with the first end of the control chip.

Optionally, the phase inverting sub-circuit is configured to input a high level to the second input end of the AND gate sub-circuit when the detection contact is connected with the second grounding contact; the voltage dividing sub-circuit is configured to input a high level to the first input end of the AND gate sub-circuit when a voltage of the battery of the vehicle is higher than a preset threshold; and the control chip is configured to conduct the electrical connection between the first input interface and the first output interface when the output end of the AND gate sub-circuit outputs a high level.

Optionally, the power supply interface device further includes: a device body including a first end embedded in a vehicle body of the vehicle and a second end away from the first end of the device body and in contact with a surface of the vehicle body. The power supply circuit is arranged in the device body, the first input interface is located at the first end of the device body, and the first output interface passes through the second end of the device body to be exposed on the surface of the vehicle body.

Optionally, the power supply interface device further includes: a magnetic part arranged at the second end of the device body. A plurality of magnetic parts are provided, and are arranged at both sides of the first output interface, respectively.

Optionally, the first grounding contact, the first power supply contact, and the detection contact are all elastic connecting and conducting members.

According to a second aspect of embodiments of the present invention, there is provided a power supply method, which is applied to the power supply interface device according to any one of the first aspect of embodiments, and the method includes: in case that the first output interface is connected with the second input interface of the contact type of the electrical equipment, transmitting the power supply current of the battery of the vehicle to the electrical equipment through the first input interface and the first output interface.

According to a third aspect of embodiments of the present invention, there is provided a vehicle including the power supply interface device according to any one of the first aspect of embodiments.

The technical scheme provided by the embodiments of the present invention can include the following beneficial technical effects.

By applying the power supply interface device including the power supply circuit to the vehicle, since the power supply circuit includes the first input interface configured to be connected with the battery of the vehicle and the first output interface configured to be connected with the second input interface of the electrical equipment, the battery of the vehicle can transmit the power supply current to the electrical equipment through the power supply circuit in the power supply interface device, thus achieving the purpose of supplying power to the electrical equipment. Moreover, since the first output interface of the power supply interface device is of the contact type and the second input interface of the electrical equipment is of the contact type, the first output interface of the power supply interface device on the vehicle is connected with the second input interface of the electrical equipment without a power supply wiring harness. Therefore, by adopting the power supply interface device of the present invention on the vehicle, the problems of a messy wiring harness, a large occupied space, an inconvenient use and the like, which exist in the related art when the vehicle uses the interface, such as USB, and the power supply wiring harness in cooperation to supply power to the electrical equipment, can be avoided. That is, when the power supply interface device of the present invention is used in the vehicle, the interior space of the vehicle can be saved because the power supply wiring harness does not need to be used in cooperation, and power can be supplied to the electric equipment more conveniently.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention.
Fig. 1 is a schematic block diagram of a power supply interface device according to an illustrative embodiment.
Fig. 2 is a schematic block diagram of a power supply interface device according to an illustrative embodiment.
Fig. 3 is a schematic block diagram of a power supply interface device according to an illustrative embodiment.
Fig. 4 is a schematic block diagram of a power supply interface device according to an illustrative embodiment.
Fig. 5 is a schematic block diagram of a power supply interface device according to an illustrative embodiment.
Fig. 6 is a schematic diagram showing a first connection manner according to an illustrative embodiment.
Fig. 7 is a schematic diagram showing a second connection manner according to an illustrative embodiment.
Fig. 8 is a flow chart of a power supply method according to an illustrative embodiment.
Fig. 9 is a schematic block diagram of a vehicle according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all possible implementations consistent with the present invention. Rather, they are merely examples of devices and methods consistent with some aspects of the present invention as detailed in the appended claims.

It should be noted that all actions of obtaining signals, information or data in the present invention are carried out under the premise of complying with the corresponding data protection laws and policies of the country where it is located and obtaining authorization from the corresponding device owner.

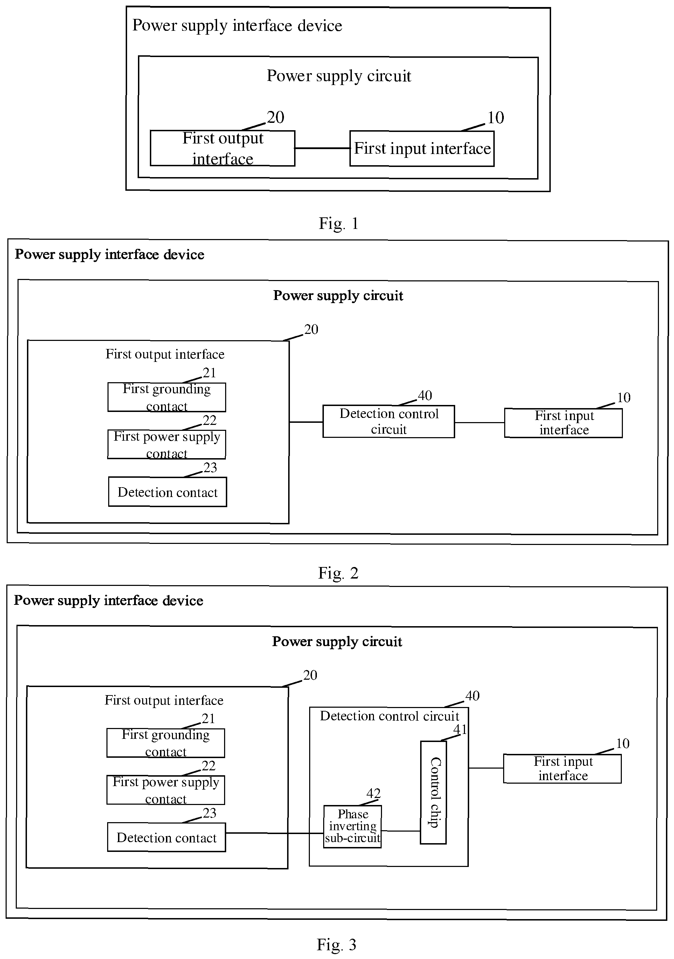

Embodiments of a power supply interface device of the present invention will be described in detail with reference to Figs. 1 to 7.

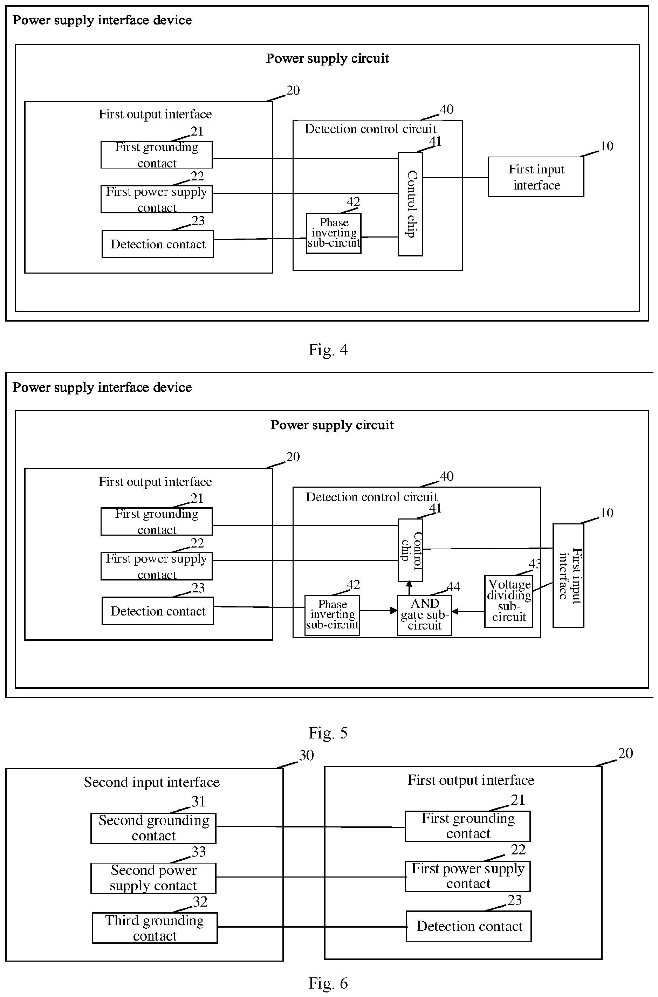

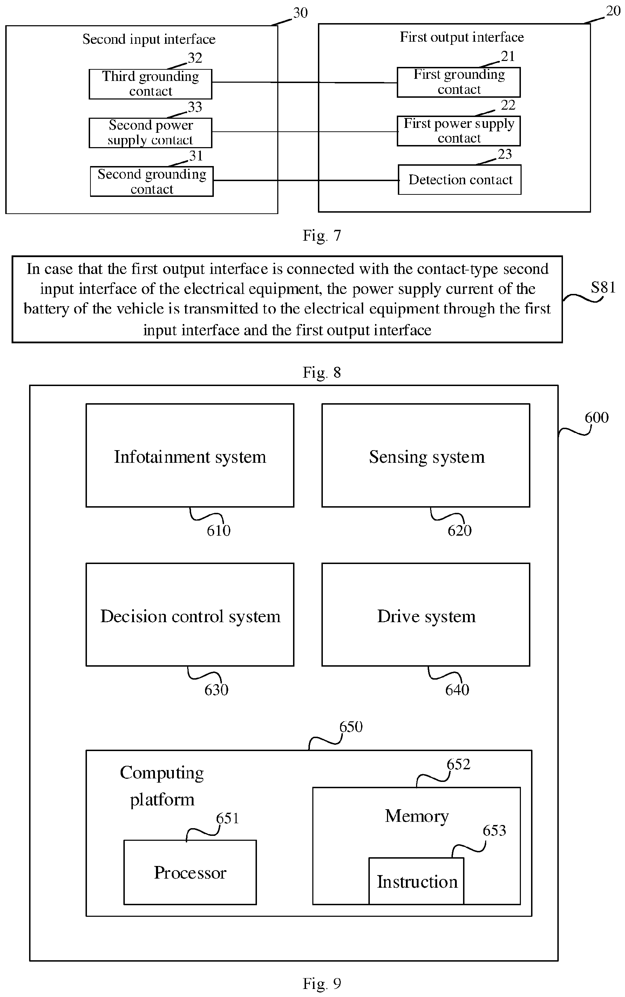

Fig. 1 is a schematic block diagram of a power supply interface device according to an illustrative embodiment. As shown in Fig. 1, the power supply interface device is applied to a vehicle and includes a power supply circuit. The power supply circuit includes a first input interface 10 and a first output interface 20, and the first input interface 10 is configured to be connected with a battery of the vehicle. The first output interface 20 is a contact-type interface, and referring to Figs. 6 and 7, the first output interface 20 is configured to be connected with a second input interface 30 of a contact type of an electrical equipment, so that the battery of the vehicle can transmit a power supply current to the electrical equipment through the power supply circuit.

Since the contact charging scheme does not need to use the power supply wiring harness in cooperation, it is a solution that can supply power to a low-power electrical equipment without the power supply wiring harness. In the embodiments of the present invention, by applying the contact charging scheme to the vehicle, the problems of the messy wiring harness, the large space occupied by the wiring harness, the inconvenient use and the like, which exist in the related art when the vehicle uses the interface such as USB and the power supply wiring harness in cooperation to supply power to the electrical equipment, can be avoided. Specifically, the power supply interface device including the power supply circuit is adopted in the vehicle. Since the power supply circuit includes the first input interface 10 configured to be connected with the battery of the vehicle and the first output interface 20 configured to be connected with the second input interface 30 of the electrical equipment, the battery of the vehicle can transmit the power supply current to the electrical equipment through the power supply circuit in the power supply interface device, thus achieving the purpose of supplying power to the electrical equipment. Moreover, since the first output interface 20 of the power supply interface device is of the contact type and the second input interface 30 of the electrical equipment is of the contact type, the first output interface 20 of the power supply interface device on the vehicle is connected with the second input interface 30 of the electrical equipment through contacts, without the power supply wiring harness. Therefore, by adopting the power supply interface device of the present invention on the vehicle, the problems of the messy wiring harness, the large occupied space, the inconvenient use and the like, which exist in the related art when the vehicle uses the interface such as USB and the power supply wiring harness in cooperation to supply power to the electrical equipment, can be avoided. That is, when the power supply interface device of the present invention is used in the vehicle, the interior space of the vehicle can be saved because the power supply wiring harness does not need to be used in cooperation, and power can be supplied to the electric equipment more conveniently.

It should be noted here that the contact charging scheme is generally a two-contact charging scheme, in which one contact is a Power contact and the other contact is a GND contact. Although the two-contact charging scheme is widely used in many consumer electronics fields such as smart home and smart wear, for example, the two-contact charging scheme is used in smart watches, Bluetooth headsets, electric toothbrushes, smart thermos cups, curling irons and other electrical devices, if the two-contact charging scheme is directly applied to the vehicle field, there will be many problems due to the particularity of the vehicle environment. For example, in the cockpit of the vehicle, the user is attuned to putting things conveniently. When the user places a metal object, such as a key, on the surface of the two-contact power supply interface, it is easy to cause short circuit or electrical leakage of the two-contact power supply interface, which has low safety and wastes electric energy. For another example, in the vehicle cockpit, the user conveniently places the metal object near the two-contact power supply interface, and with the driving of the vehicle and the vibration of a vehicle body, the metal object may move to the surface of the two-contact power supply interface, thus resulting in the short circuit or electrical leakage of the two-contact power supply interface, which will case safety problems and waste of electric energy.

In view of this, the present invention proposes an embodiment. Referring to Fig. 2, the power supply circuit further includes a detection control circuit 40, and the first input interface 10 is connected with the first output interface 20 through the detection control circuit 40. The first output interface 20 includes a first grounding contact 21, a first power supply contact 22, and a detection contact 23. Referring to Fig. 7, the detection contact 23 is configured to be connected with a second grounding contact 31 of the second input interface 30.

The detection control circuit 40 is configured to conduct an electrical connection between the first input interface 10 and the first output interface 20 at least when the detection contact 23 is connected with the second grounding contact 31. The detection control circuit 40 is also configured to break off the electrical connection between the first input interface 10 and the first output interface 20 when the detection contact 23 is disconnected from the second grounding contact 31.

In some embodiments, the detection control circuit 40 may include a switch, and a function of the detection control circuit 40 controlling conduction or breakoff of the electrical connection between the first input interface 10 and the first output interface 20 can be realized by controlling the switch.

The first grounding contact 21 is a GND contact. The first power supply contact 22 is a power contact. The detection contact 23 is a detecting contact. The second grounding contact 31 is a GND contact.

Based on the two-contact power supply scheme in the related art, the power supply interface device including the power supply circuit of the present invention can make the detection control circuit 40 conduct the electrical connection between the first input interface 10 and the first output interface 20 at least when the detection contact 23 is connected with the second grounding contact 31, and also make the detection control circuit 40 break off the electrical connection between the first input interface 10 and the first output interface 20 when the detection contact 23 is disconnected from the second grounding contact 31. Therefore, the three-contact power supply manner of the present invention can solve the problem of the short circuit or electric leakage that may exist in the two-contact power supply scheme, thus ensuring the electrical safety.

In some scenes, some electrical equipment such as a fragrance machine and a humidifier are power-free equipment, there is no integrated battery in the power-free equipment, and for these power-free equipment, the detection contact 23 cannot enable the detection control circuit 40 in a commonly used active high way. Therefore, the present invention proposes an embodiment. Referring to Fig. 3, the detection control circuit 40 includes a control chip 41 and a phase inverting sub-circuit 42, and the phase inverting sub-circuit 42 is connected between the detection contact 23 and a first end of the control chip 41. The phase inverting sub-circuit 42 is configured to inform the control chip 41 whether the detection contact 23 is connected with the second grounding contact 31.

In some embodiments, referring to Figs. 4 and 7, a second end of the control chip 41 is connected with the first grounding contact 21, a third end of the control chip 41 is connected with the first power supply contact 22, and a fourth end of the control chip 41 is connected with the first input interface 10. The first grounding contact 21 is configured to be connected with a third grounding contact 32 of the second input interface 30, and the first power supply contact 22 is configured to be connected with a second power supply contact 33 of the second input interface 30. The third grounding contact 32 is a GND contact, and the second power supply contact 33 is a power contact.

The control chip 41 is configured to conduct or break off the electrical connection between the first input interface 10 and the first output interface 20.

Since the second grounding contact 31 is a GND contact, the voltage of the second grounding contact 31 is at a low level, for example, denoted as 0. When the second grounding contact 31 is connected with the detection contact 23, the voltage of the detection contact 23 is also at a low level, and the phase inverting sub-circuit 42 can convert the low level of the detection contact 23 to a high level, for example, denoted as 1. The high level output by the phase inverting sub-circuit 42 can enable the detection control circuit 40. Therefore, the power supply interface device of the present invention has universality, and can not only supply power to the electrical equipment without the power supply, but also supply power to the electrical equipment with the power supply.

In some embodiments, the detection control circuit 40 further includes a voltage dividing sub-circuit 43 and an AND gate sub-circuit 44. Referring to Fig. 5, a first end of the voltage dividing sub-circuit 43 is connected with a first input end of the AND gate sub-circuit 44, and a second end of the voltage dividing sub-circuit 43 is connected with the first input interface 10.

The phase inverting sub-circuit 42 is connected between the detection contact 23 and the first end of the control chip 41. Specifically, the phase inverting sub-circuit 42 is connected with a second input end of the AND gate sub-circuit 44, and the output end of the AND gate sub-circuit 44 is connected with the first end of the control chip 41.

In this way, the phase inverting sub-circuit 42 inputs a high level to the second input end of the AND gate sub-circuit 44 when the detection contact 23 is connected with the second grounding contact 31. When the voltage of the battery of the vehicle is higher than a preset threshold, the voltage dividing sub-circuit 43 inputs a high level to the first input end of the AND gate sub-circuit 44. In case that each input end of the AND gate sub-circuit 44 is at a high level, the output end of the AND gate sub-circuit 44 outputs a high level. The control chip 41 conducts the electrical connection between the first input interface 10 and the first output interface 20, when the output end of the AND gate sub-circuit 44 outputs a high level. In this way, the problem of the short circuit or electric leakage that may exist in the two-contact power supply scheme can be avoided, and the risk that may exist because the battery of the vehicle supplies power to the electrical equipment when the voltage of the battery of the vehicle is lower than or equal to the preset threshold can be avoided. Therefore, the power supply interface device of the present invention not only has high power supply safety, but also can protect the battery of the vehicle.

In some embodiments, the power supply interface device further includes a device body, and the device body includes a first end embedded in the vehicle body of the vehicle, and a second end away from the first end of the device body and in contact with a surface of the vehicle body. The power supply circuit is arranged in the device body, and the first input interface 10 is located at the first end of the device body, and the first output interface 20 passes through the second end of the device body to be exposed on the surface of the vehicle body. The first output interface 20 exposed on the surface of the vehicle body facilitates the connection with the second input interface 30 of the electrical equipment.

In some embodiments, the power supply interface device further includes a magnetic part, the magnetic part is arranged at the second end of the device body, a plurality of magnetic parts are provided, and the plurality of magnetic parts are arranged at two sides of the first output interface 20, respectively. In this way, when the first output interface 20 is connected with the second input interface 30 of the electrical equipment, the magnetic effect of the magnetic part can assist the alignment of the first output interface 20 and the second input interface 30, that is, assisting the second input interface 30 of the electrical equipment in positioning the first output interface 20 of the power supply interface device. Moreover, the magnetic effect of the magnetic part can also stabilize the connection between the electrical equipment and the power supply interface device after the first output interface 20 is connected with the second input interface 30, so as to avoid the problem of disconnection between the electrical equipment and the power supply interface device caused by the vibration of vehicle body.

In some embodiments, an arrangement position of the first grounding contact 21 and an arrangement position of the detection contact 23 are symmetrically distributed with respect to an arrangement position of the first power supply contact 22.

For example, the position of the first grounding contact 21 on the second end of the device body and the position of the detection contact 23 on the second end of the device body are symmetrically distributed with respect to the position of the first power supply contact 22 on the second end of the device body, for example, centrally symmetrically distributed.

In case that the first grounding contact 21 and the detection contact 23 are centrally symmetrically distributed and arranged with respect to the first power supply contact 22, and the position of the second grounding contact 31 on the electrical equipment and the position of the third grounding contact 32 on the electrical equipment are also centrally symmetrically distributed with respect to the position of the second power supply contact 33 on the electrical equipment, and then, in case that both the second grounding contact 31 and the third grounding contact 32 are GND contacts, besides a first connection manner in the previous embodiments, in which the detection contact 23 is connected with the second grounding contact 31 and the first grounding contact 21 is connected with the third grounding contact 32, there is also a second connection manner, in which the detection contact 23 is connected with the third grounding contact 32 and the first grounding contact 21 is connected with the second grounding contact 31. Referring to Figs. 6 and 7, the first connection manner and the second connection manner are substantially the same.

In other words, in case that the first grounding contact 21 and the detection contact 23 are centrally symmetrically distributed and arranged with respect to the first power supply contact 22, and the second grounding contact 31 and the third grounding contact 32 are also centrally symmetrically distributed with respect to the second power supply contact 33, the embodiments of the present invention supports the first connection manner and the second connection manner, that is, supporting the forward insertion and reverse insertion of the electrical equipment into the power supply interface device. Since the forward insertion and reverse insertion of the electrical equipment into the power supply interface device are supported, the user can more effectively insert the electrical equipment into the power supply interface device to be charged or consume power with blind operations, which is convenient for the user to operate.

In some embodiments, the first grounding contact 21, the first power supply contact 22, and the detection contact 23 are all elastic connecting and conducting members.

For example, the first grounding contact 21, the first power supply contact 22, and the detection contact 23 are male ends of pogo pins. Accordingly, the second grounding contact 31, the third grounding contact 32, and the second power supply contact 33 are female ends of the pogo pins.

Fig. 8 is a flow chart of a power supply method according to an illustrative embodiment. As shown in Fig. 8, the power supply method is applied to any one of the aforementioned power supply interface devices, and the power supply method includes the following steps.

In step S81, in case that the first output interface of the contact type is connected with the second input interface of the contact type of the electrical equipment, the power supply current of the battery of the vehicle is transmitted to the electrical equipment through the first input interface and the first output interface.

For example, at least when the detection contact is connected with the second grounding contact, the electrical connection between the first input interface and the first output interface is conducted, or when the detection contact is disconnected from the second grounding contact, the electrical connection between the first input interface and the first output interface is broken off.

For example, when the output end of the AND gate sub-circuit outputs a high level, the electrical connection between the first input interface and the first output interface is conducted. When the output end of the AND gate sub-circuit outputs a low level, the electrical connection between the first input interface and the first output interface is broken off.

By adopting the method, the interior space of the vehicle can be saved, and the power can be supplied to the electrical equipment more conveniently.

Fig. 9 is a block diagram of a vehicle 600 according to an illustrative embodiment. For example, the vehicle 600 may be a hybrid vehicle, an electric vehicle or other types of vehicles. The vehicle 600 may be an autonomous vehicle, a semi-autonomous vehicle or a non-autonomous vehicle.

Referring to Fig. 9, the vehicle 600 includes any one of the power supply interface devices in the foregoing embodiments. In addition, the vehicle 600 may include various subsystems, such as an infotainment system 610, a sensing system 620, a decision control system 630, a drive system 640, and a computing platform 650. The vehicle 600 can also include more or less subsystems, and each subsystem can include a plurality of components. In addition, each subsystem and each component of the vehicle 600 can be interconnected in a wired or wireless manner.

In some embodiments, the infotainment system 610 may include a communication system, an entertainment system, a navigation system and the like.

The sensing system 620 may include several sensors for sensing information of the environment around the vehicle 600. For example, the sensing system 620 may include a global positioning system (the global positioning system may be a GPS system, a Beidou system or other positioning systems), an inertial measurement unit (IMU), a laser radar, a millimeter-wave radar, an ultrasonic radar, a camera and the like.

The decision control system 630 may include a computing system, a vehicle controller, a steering system, an accelerator and a braking system.

The drive system 640 may include components that provide power movement for the vehicle 600. In an embodiment, the drive system 640 may include an engine, an energy source, a transmission system and wheels. The engine can be one or a combination of an internal combustion engine, an electric motor and an air compression engine. The engine can convert the energy provided by the energy source into the mechanical energy.

Some or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may also include, for example, a graphic process unit (GPU), a field programmable gate array (FPGA), a system on chip (SOC), an application specific integrated circuit (ASIC) or a combination thereof.

The memory 652 can be realized by any type of volatile or non-volatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 can also store data, such as a road map, route information, a vehicle position, a direction, a speed and other data. The data stored in the memory 652 can be used by the computing platform 650.

In the embodiments of the present invention, the processor 651 can execute the instructions 653 to complete all or part of the steps of the power supply method described above.

In another illustrative embodiment, there is also provided a computer program product, which includes a computer program executable by a programmable device, the computer program having a code portion for executing the above power supply method when executed by the programmable device.

Other embodiments of the present invention will easily occur to those skilled in the art after they consider the specification and practice the present invention. The present invention is intended to cover any variations, uses or adaptations of the present invention, which follow the general principles of the present invention and include the common sense or common technical means in the related art that are not disclosed in the present invention.

It should be understood that the present invention is not limited to the precise structure described above and shown in the drawings, and various modifications and changes can be made without departing from the scope thereof. The scope of the present invention is limited only by the appended claims.

## Claims

1. A power supply interface device, to be applied to a vehicle, and comprising a power supply circuit, and the power supply circuit comprising:
a first input interface (10) configured to be connected with a battery of the vehicle; and
a first output interface (20) of a contact type configured to be connected with a second input interface (30) of a contact type of an electrical equipment, so that the battery of the vehicle is able to transmit a power supply current to the electrical equipment through the power supply circuit.

2. The power supply interface device according to claim 1, wherein the power supply circuit further comprises a detection control circuit (40), and the first input interface (10) is connected with the first output interface (20) through the detection control circuit (40);
the first output interface (20) comprises a first grounding contact (21), a first power supply contact (22) and a detection contact (23), the detection contact (23) is configured to be connected with a second grounding contact (31) of the second input interface (30); and
the detection control circuit (40) is configured to conduct an electrical connection between the first input interface (10) and the first output interface (20) at least when the detection contact (23) is connected with the second grounding contact (31), and to break off the electrical connection between the first input interface (10) and the first output interface (20) when the detection contact (23) is disconnected from the second grounding contact (31).

3. The power supply interface device according to claim 2, wherein an arrangement position of the first grounding contact (21) and an arrangement position of the detection contact (23) are symmetrically distributed with respect to an arrangement position of the first power supply contact (22).

4. The power supply interface device according to claim 2 or 3, wherein the detection control circuit (40) comprises a control chip (41) and a phase inverting sub-circuit (42), and the phase inverting sub-circuit (42) is connected between the detection contact (23) and a first end of the control chip (41); and
the phase inverting sub-circuit (42) is configured to inform the control chip (41) whether the detection contact (23) is connected with the second grounding contact (31).

5. The power supply interface device according to claim 4, wherein a second end of the control chip (41) is connected with the first grounding contact (21), a third end of the control chip (41) is connected with the first power supply contact (22), and a fourth end of the control chip (41) is connected with the first input interface (10), wherein the first grounding contact (21) is configured to be connected with a third grounding contact (32) of the second input interface (30), and the first power supply contact (22) is configured to be connected with a second power supply contact (33) of the second input interface (30); and
the control chip (41) is configured to conduct or break off the electrical connection between the first input interface (10) and the first output interface (20).

6. The power supply interface device according to claim 4 or 5, wherein the detection control circuit (40) further comprises a voltage dividing sub-circuit (43) and an AND gate sub-circuit (44);
a first end of the voltage dividing sub-circuit (43) is connected with a first input end of the AND gate sub-circuit (44), and a second end of the voltage dividing sub-circuit (43) is connected with the first input interface (10); and
the phase inverting sub-circuit (42) is connected between the detection contact (23) and the first end of the control chip (41), wherein the phase inverting sub-circuit (42) is connected with a second input end of the AND gate sub-circuit (44), and an output end of the AND gate sub-circuit (44) is connected with the first end of the control chip (41).

7. The power supply interface device according to claim 6, wherein the phase inverting sub-circuit (42) is configured to input a high level to the second input end of the AND gate sub-circuit (44) when the detection contact (23) is connected with the second grounding contact (31);
the voltage dividing sub-circuit (43) is configured to input a high level to the first input end of the AND gate sub-circuit (44) when a voltage of the battery of the vehicle is higher than a preset threshold; and
the control chip (41) is configured to conduct the electrical connection between the first input interface (10) and the first output interface (20) when the output end of the AND gate sub-circuit (44) outputs a high level.

8. The power supply interface device according to any one of claims 2 to 7, further comprising:
a device body comprising a first end embedded in a vehicle body of the vehicle and a second end away from the first end of the device body and in contact with a surface of the vehicle body,
wherein the power supply circuit is arranged in the device body, the first input interface (10) is located at the first end of the device body, and the first output interface (20) passes through the second end of the device body to be exposed on the surface of the vehicle body.

9. The power supply interface device according to claim 8, further comprising:
a magnetic part arranged at the second end of the device body,
wherein a plurality of magnetic parts are provided, and are arranged at both sides of the first output interface (20), respectively.

10. The power supply interface device according to any one of claims 2 to 9, wherein the first grounding contact (21), the first power supply contact (22), and the detection contact (23) are all elastic connecting and conducting members.

11. A power supply method, applied to a power supply interface device according to any one of claims 1 to 10, and comprising:
in case that the first output interface (20) is connected with the second input interface (30) of the contact type of the electrical equipment, transmitting (S81) the power supply current of the battery of the vehicle to the electrical equipment through the first input interface (10) and the first output interface (20).

12. A vehicle, comprising a power supply interface device according to any one of claims 1 to 10.
